# EUROPEAN PATENT APPLICATION

(11) **EP 4 819 291 A1**
(43) Date of publication of application: **07.10.2026**
(21) Application number: 26169776.7
(22) Date of filing: 31.03.2026
(51) Int. Cl.: H01M 10/0587, H01M 4/38, H01M 4/587, H01M 10/0525, H01M 10/0569, H01M 4/02, H01M 4/131, H01M 4/525, H01M 10/0567

(54) **LITHIUM-ION BATTERY**

(30) Priority: 03.04.2025 CN 202510419561
(71) Applicant: Zhuhai CosMX Battery Co., Ltd., Zhuhai, Guangdong 519180 (CN)
(72) Inventor: WU, Siyong, Zhuhai, 519180 (CN); ZENG, Changan, Zhuhai, 519180 (CN)
(74) Representative: Murgitroyd & Company

(57) **Abstract**

The invention relates to the technical field of batteries, and in particular to a lithium-ion battery. The lithium-ion battery comprises a positive electrode plate, a negative electrode plate and an electrolyte, wherein the positive electrode plate comprises a ternary material, and the ternary material comprises a doping element M, wherein M comprises one or more of Al, Mg, Ti, Fe, W, V and Mo; the negative electrode plate comprises a silicon carbon material having a median particle size Dv50 of 5 µm-30 µm, and I₃ > Max[I₁, I₂]; the electrolyte comprises a linear carbonate and a cyclic carbonate, and the weight ratio of the linear carbonate to the cyclic carbonate is 1-8, and the sum of the percentages of the linear carbonate and the cyclic carbonate to the total mass of the electrolyte is 20%-75%.

## Description

### TECHNICAL FIELD

The invention relates to the technical field of batteries, and in particular to a lithium-ion battery.

### BACKGROUND

Lithium-ion batteries are widely used in fields such as portable electronic devices, electric vehicles, and energy storage systems, and their service life and safety performance are crucial to these applications. Currently, aluminum foil plays an important role in lithium-ion batteries. As the positive electrode current collector (i.e., the current conductor of the positive electrode), its main function is to effectively conduct electricity and support the positive electrode material. Meanwhile, silicon has been widely used in negative electrode in recent years due to its high specific capacity. However, when aluminum foil and silicon negative electrode material are both present in the battery system, the silicon negative electrode material expands rapidly during cycling, which can lead to aluminum foil breakage, thus affecting the service life and safety performance of lithium-ion batteries.

### SUMMARY

It has found through research that in the ternary/silicon negative electrode system of lithium-ion batteries, under high current deep discharge, the silicon negative electrode expands rapidly, causing the aluminum foil to be repeatedly subjected to certain pressures, which can lead to aluminum foil breakage, resulting in internal short circuits, increased resistance, capacity decay, and even safety hazards for batteries. Aluminum foil breakage typically manifests as cracks or peeling on the aluminum foil surface. This not only affects the electrical performance of the battery but may also shorten its life and reduce its safety performance.

In order to solve the problem of aluminum foil breakage, the invention provides a lithium-ion battery (hereinafter referred to as battery). Through the synergistic effect of linear carbonate and cyclic carbonate in the electrolyte, ternary material in the positive electrode plate, and silicon carbon material in the negative electrode plate, the stability of the ternary material and silicon carbon material is improved, and the expansion rate of the battery is reduced, thus reducing the effect of expansion on the positive electrode current collector and avoiding positive electrode current collector (e.g., aluminum foil) breakage. Meanwhile, the infiltration of the electrolyte in the positive electrode plate and negative electrode plate is improved, so that the reaction between the ternary material and silicon carbon material can be carried out uniformly, and the electrochemical and cycling performance of the lithium-ion battery can be avoid from being reduced due to excessive local reaction. Moreover, the peeling or expansion of ternary material and silicon carbon material during the charging and discharging process of the lithium-ion battery is reduced, thereby improving the problem of positive electrode current collector breakage, improving the cycling performance and safety performance of the battery, and extending the service life of the battery.

The invention provides a lithium-ion battery, wherein the lithium-ion battery comprises a positive electrode plate, a negative electrode plate and an electrolyte, wherein the positive electrode plate comprises a ternary material, and the ternary material comprises a doping element M, wherein M comprises one or more of Al, Mg, Ti, Fe, W, V and Mo; the negative electrode plate comprises a silicon carbon material having a median particle size Dv50 of 5 µm-30 µm, in a Raman spectrum of the silicon carbon material, a first characteristic peak located at 470 cm⁻¹-480 cm⁻¹ has an intensity of I₁, a second characteristic peak located at 507 cm⁻¹-517 cm⁻¹ has an intensity of I₂, a third characteristic peak located at 1330 cm⁻¹-1350 cm⁻¹ has an intensity of I₃, and I₃ > Max[I₁, I₂];
the electrolyte comprises a linear carbonate and a cyclic carbonate, the weight ratio of the linear carbonate to the cyclic carbonate is 1-8, and the sum of the percentages of the linear carbonate and the cyclic carbonate to the total mass of the electrolyte is 20%-75%.

By means of the above technical solution, the invention has at least the following advantages over the prior art:
The silicon carbon material in the lithium-ion battery of the invention has higher structural stability and lower volume expansion rate, and the higher linear carbonate proportion significantly reduces the overall viscosity of the electrolyte and improves the infiltration for electrodes, achieving higher electrolyte infiltration and higher lithium ion mobility, so that the electrolyte can fully infiltrate the silicon carbon material and the ternary material, and the reaction between the silicon carbon material and the ternary material can be carried out uniformly, thereby reducing the peeling or expansion of the ternary material and the silicon carbon material during the charging and discharging process of the battery. Meanwhile, the cyclic carbonate in the electrolyte can also form an SEI film on the surface of the silicon carbon material, which reduces the volume expansion of the silicon carbon material. Moreover, the doping element M in the ternary material can also reduce the dissolution of transition metal ions in the ternary material and reduce the damage of transition metal ions to the SEI film, thereby further reducing the volume expansion of the silicon carbon material, further alleviating or even solving the problem of positive electrode current collector breakage, improving the cycling stability and safety performance of the lithium-ion battery and extending the service life of the lithium-ion battery.

Other features and advantages of the invention will be described in detail in the Detailed Description of Embodiments hereinbelow.

### BRIEF DESCRIPTION OF THE DRAWINGS

FIG. 1 is a schematic structural view of a wound cell in an example of the invention.
FIG. 2 is a Raman spectrum of a silicon carbon material in an example of the invention.
FIG. 3 is a top view of a positive electrode plate in an example of the invention.
FIG. 4 is a top view of a negative electrode plate in an example of the invention.

### DETAILED DESCRIPTION OF THE EMBODIMENTS

Hereinafter, specific embodiments of the invention will be described in detail. It should be understood that the specific embodiments described herein are only used to illustrate and explain the invention and are not used to limit the invention. In the invention, unless otherwise specified, all the numerical ranges are inclusive of the endpoints.

The invention provides a lithium-ion battery, wherein the lithium-ion battery comprises a positive electrode plate, a negative electrode plate and an electrolyte, wherein the positive electrode plate comprises a ternary material, and the ternary material comprises a doping element M, wherein M comprises one or more of Al, Mg, Ti, Fe, W, V and Mo; the negative electrode plate comprises a silicon carbon material having a median particle size Dv50 of 5 µm-30 µm, in a Raman spectrum of the silicon carbon material, a first characteristic peak located at 470 cm⁻¹-480 cm⁻¹ has an intensity of I₁, a second characteristic peak located at 507 cm⁻¹-517 cm⁻¹ has an intensity of I₂, a third characteristic peak located at 1330 cm⁻¹-1350 cm⁻¹ has an intensity of I₃, and I₃ > Max[I₁, I₂];
the electrolyte comprises a linear carbonate and a cyclic carbonate, and the weight ratio of the linear carbonate to the cyclic carbonate is 1-8. A higher proportion of linear carbonate significantly reduces the overall viscosity of the electrolyte, improves electrode infiltration, and reduces polarization, thereby increasing energy density and cycling stability. Meanwhile, an appropriate amount of cyclic carbonates can still maintain stable SEI film formation and prevent silicon-based electrode from peeling off. Such proportion can balance the high-temperature safety performance and cycling stability of the battery.

The sum of the percentages of the linear carbonate and the cyclic carbonate to the total mass of the electrolyte is 20%-75% (e.g., 20%, 25%, 30%, 35%, 40%, 45%, 50%, 55%, 60%, 65%, 70% or 75%), ensuring that the total content of the linear carbonate and cyclic carbonate in the electrolyte can effectively dissolve the lithium salt and guarantee good ionic conductivity.

The median particle size Dv50 of the silicon carbon material may be 5 µm-30 µm (e.g., 5 µm, 10 µm, 12 µm, 15 µm, 18 µm, 20 µm, 22 µm, 25 µm, 28 µm or 30 µm). Controlling the median particle size Dv50 of the silicon carbon material within the above range can ensure that the reaction in the silicon carbon material is more uniform, avoid the peeling or expansion of silicon-carbon material due to excessive local reaction, thereby improving the cycling stability of the battery.

In the invention, the median particle size Dv50 can be determined by means of a laser particle size analyzer.

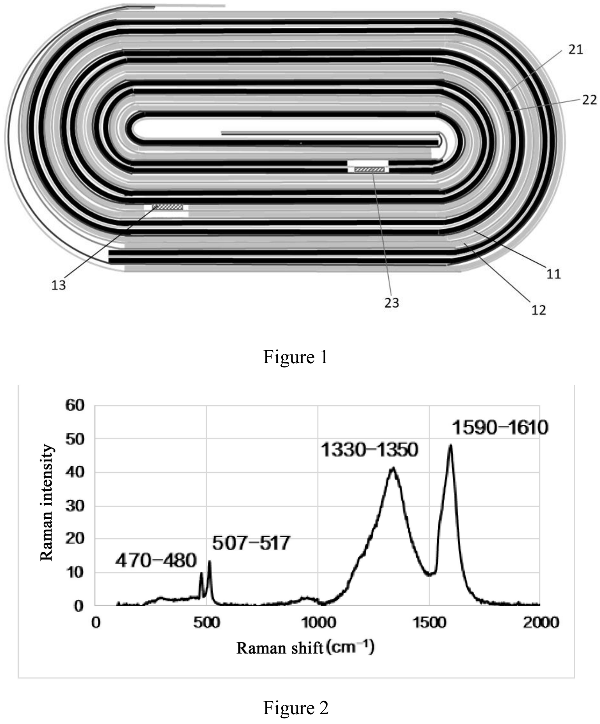

As shown in FIG.2, in the Raman spectrum of the silicon carbon material, a first characteristic peak located at 470 cm⁻¹-480 cm⁻¹ (e.g., 470 cm⁻¹, 471 cm⁻¹, 472 cm⁻¹, 473 cm⁻¹, 474 cm⁻¹, 475 cm⁻¹, 476 cm⁻¹, 477 cm⁻¹, 478 cm⁻¹, 479 cm⁻¹ or 480 cm⁻¹) has an intensity of I₁, a second characteristic peak located at 507 cm⁻¹-517 cm⁻¹ (e.g., 507 cm⁻¹, 508 cm⁻¹, 509 cm⁻¹, 510 cm⁻¹, 511 cm⁻¹, 512 cm⁻¹, 513 cm⁻¹, 514 cm⁻¹, 515 cm⁻¹, 516 cm⁻¹ or 517 cm⁻¹) has an intensity of I₂, a third characteristic peak located at 1330 cm⁻¹-1350 cm⁻¹ (e.g., 1330 cm⁻¹, 1332 cm⁻¹, 1335 cm⁻¹, 1338 cm⁻¹, 1340 cm⁻¹, 1342 cm⁻¹, 1345 cm⁻¹, 1348 cm⁻¹ or 1350 cm⁻¹) has an intensity of I₃, I₃ > Max[I₁, I₂]. The silicon in the silicon carbon material is dispersed in the carbon matrix. When the Raman spectrum of the silicon carbon material satisfies I₃ > Max[I₁, I₂], the silicon in the silicon carbon material is dispersed in the carbon matrix in an amorphous form, thereby forming a porous structure with pores on the interior and surface of the silicon carbon material. This porous structure can provide a buffer space for the expansion of silicon, thereby reducing the volume expansion of the silicon carbon material.

Max[I₁, I₂] represents the strength of the larger of I₁ and I₂. Taking I₃ > Max[I₁, I₂] as an example, it means that I₃ is greater than the strength of the larger of I₁ and I₂. For example, when the strength of the larger of I₁ and I₂ is I₁, then I₃ > I₁, when the strength of the larger of I₁ and I₂ is I₂, then I₃ > I₂.

The weight ratio of the linear carbonate to the cyclic carbonate may be 1-8 (e.g., 1, 2, 3, 4, 5, 6, 7 or 8). Controlling the weight ratio of the linear carbonate to the cyclic carbonate within the above range can allow the electrolyte to maintain a high electrochemical window and a high dielectric constant, improve electrolyte infiltration and lithium ion mobility, and allow the electrolyte to fully penetrate into the pores between the ternary materials of the positive electrode plate and the pores between the silicon carbon materials of the negative electrode plate, thereby improving ion transport within the electrode plates, reducing impedance of the battery, and increasing the charging and discharging efficiency of the battery.

The lithium-ion battery of the invention comprises an electrolyte of linear carbonate and cyclic carbonate satisfying the above weight relationship, a ternary material comprising doping element M, and a silicon carbon material satisfying the above median particle size range and having the characteristic peaks in the Raman spectrum satisfying the above relationship. In this case, the reaction between the silicon carbon material and the ternary material can be carried out uniformly and the stability of the SEI film can be maintained, reducing the risk of peeling or expansion of the ternary material and silicon carbon material during the charging and discharging process of the battery, thereby improving the problem of positive electrode current collector breakage, improving the safety performance and cycling stability of the battery, and extending the service life of the lithium-ion battery.

In the invention, by controlling the weight relationship between the linear carbonate and the cyclic carbonate, the intensity of the characteristic peaks in the Raman spectrum and median particle size of the silicon carbon material, and the doping element M in the ternary material, the cycling performance and safety performance of the lithium-ion battery can be improved and the service life can be extended compared with the prior art. To further improve the effect, one or more technical features may be further optimized.

In an embodiment, the silicon carbon material has a median particle size Dv50 of 6 µm-12 µm.

In an embodiment, the silicon carbon material comprises a carbon matrix and silicon material located in the pores of the carbon matrix.

In an embodiment, the weight ratio c of the linear carbonate to the cyclic carbonate is 2-5.

According to a specific embodiment, the median particle size Dv50 of the silicon carbon material is 6 µm-12 µm, and the weight ratio c of the linear carbonate to the cyclic carbonate is 2-5.

In an embodiment, the weight content p% of the doping element M is 0.01%-5% (e.g., 0.01%, 0.05%, 0.1%, 0.5%, 1%, 1.5%, 2%, 2.5%, 3%, 3.5%, 4%, 4.5% or 5%), based on the total weight of the ternary material. The doping element M in the ternary material can improve the structural stability of the ternary material. By controlling the weight content of the doping element M in the ternary material within the above range, the stability of the ternary material can be further improved, the dissolution of transition metal ions in the ternary material can be reduced, thereby reducing the damage of transition metal ions to the interface of the negative electrode plate, thus improving the stability of the negative electrode plate, reducing the rapid expansion of the negative electrode plate, avoiding the problem of positive electrode current collector breakage caused by the rapid expansion of the positive electrode plate, and improving the cycling stability and safety performance of the lithium-ion battery.

In an embodiment, the weight content p% of the doping element M is 0.1%-3%, based on the total weight of the ternary material.

In an embodiment, the average particle size d of the silicon carbon material is 6 µm-12 µm, the weight ratio c of the linear carbonate to the cyclic carbonate is 2-5, and the weight content p% of the doping element M is 0.1%-3%, based on the total weight of the ternary material, and the doping element M comprises one or more of Al, Mg, Ti, Fe, W, V and Mo.

As shown in FIG.2, in the Raman spectrum of the silicon carbon material, a fourth characteristic peak located at 1590 cm⁻¹-1610 cm⁻¹ (e.g., 1590 cm⁻¹, 1592 cm⁻¹, 1595 cm⁻¹, 1598 cm⁻¹, 1600 cm⁻¹, 1602 cm⁻¹, 1605 cm⁻¹, 1608 cm⁻¹ or 1610 cm⁻¹) has an intensity of I₄, and I₄ > Max[I₁, I₂].

In an embodiment, the silicon carbon material further satisfies the following relation: p=(I₁+I₃)/(I₂+I₄), where 0.65 ≤ ρ ≤ 2.4 (e.g., 0.65, 0.8, 1, 1.3, 1.5, 1.8, 2, 2.3 or 2.4). When the silicon carbon material meets the above relation, the silicon carbon material has a better crystal form, which is beneficial to reducing the volume expansion of the silicon carbon material. When ρ < 0.65, the crystallinity of the silicon carbon material is too high, and crystalline silicon is prone to appear on the surface of the silicon carbon material. As a result, the expansion of silicon can not be suppressed, which can easily lead to the cell squeezing the film and shell, and thus cause the corner of the battery to break or be damaged. When ρ > 2.4, the defects of the silicon carbon material are too high and the specific surface area is large, which increases the side reactions of the silicon carbon material and may result in some carbon matrix not being completely carbonized, thus affecting the initial charging and discharging efficiency and cycling performance of the battery.

In an embodiment, the silicon carbon material further satisfies the following relation: I₃ > Max[I₁, I₂], and I₄ > Max[I₁, I₂], ρ=(I₁+I₃)/(I₂+I₄), where 0.65 ≤ ρ ≤ 2.4.

In the invention, the Raman spectrum of the silicon carbon material can be determined by means of a conventional testing method in the art, such as using a Thermo Fisher Raman spectrometer with a wavenumber range of 400 cm⁻¹-4000 cm⁻¹.

In an embodiment, the ternary material comprises nickel element, cobalt element, and manganese element. The nickel element can improve the capacity of the ternary material and the energy density of the positive electrode plate, thus enabling the lithium-ion battery to store more energy. The cobalt element can improve the stability of the lithium-ion battery, extend the cycle life thereof, and enhance the overall performance thereof. The manganese element has a large atomic radius, which can support the positive electrode plate skeleton during the charging and discharging process, thereby improving the structural stability of the ternary material, improving the safety performance of the lithium-ion battery, extending the life of the lithium-ion battery, and reducing the cost of the ternary material.

In an embodiment, the ternary material comprises nickel element, cobalt element, and manganese element, and further comprises a doping element M, which includes one or more of Al, Mg, Ti, Fe, W, V, and Mo.

In an embodiment, the molar percentage N% of the manganese element in the ternary material is 2% ≤ N ≤ 30% (e.g., 2%, 5%, 8%, 10%, 12%, 15%, 18%, 20%, 22%, 25%, 28% or 30%). By controlling the molar percentage N% of the manganese element in the ternary material within the above range, during the charging and discharging process of the lithium-ion battery, as the deintercalation and intercalation of lithium ions, the manganese element having a large atomic radius combines with oxygen, reducing the release of active oxygen in the ternary material, reducing the side reactions between the electrolyte and active oxygen, reducing the generation of HF, and further reducing the risk of aluminum foil being corroded by HF. In addition, the manganese element can maintain the structural stability of the positive electrode, thereby reducing overcharging. Overcharging will cause silicon material to undergo excessive alloying reaction with lithium ions, which will aggravate the volume expansion of the silicon material. Reducing overcharging can reduce the pressure of aluminum foil breakage caused by the long-term rapid expansion of the silicon negative electrode.

When N > 30%, the molar content of the manganese element in the ternary material is high, which affects the power output and charging and discharging performance of the lithium-ion battery. Furthermore, the capacity of the ternary material decreases, thereby reducing the energy density of the lithium-ion battery. In order to maintain the energy density of the lithium-ion battery, the volume of the lithium-ion battery needs to be increased, and the thickness of the corresponding positive electrode plate will also increase, which reduces the lithium ion deintercalation/intercalation kinetics. The manganese content is too high, which leads to ion migration with the positive electrode oxygen, causing the longitudinal Mn-O bonds to gradually elongate and the horizontal Mn-O bonds to shorten. This results in the linear MnO₂ arrangement elongating in the axial direction, inducing Jahn-Teller distortion, which will cause drastic structural changes in the ternary material, accelerating the destruction and deactivation of the ternary material structure and increasing the risk of aluminum foil breakage. When M < 2%, the molar content of the manganese element in the ternary material is too low, which reduces the structural stability of the ternary material, reduces the safety performance of the lithium-ion battery and shortens the cycle life of the lithium-ion battery. When a large amount of lithium ions are deintercalated from the positive electrode, the silicon negative electrode undergoes an excessive alloying reaction with the excess lithium ions, which not only increases the expansion of the negative electrode, but also causes irreversible loss of capacity.

In an embodiment, the molar percentage N% of the manganese element in the ternary material is 5% ≤ N ≤ 20%.

In the invention, the molar percentage of the manganese element in the ternary material refers to the ratio of the molar amount of the manganese element to the sum of the molar amounts of all elements in the ternary material.

In an embodiment, the ternary material has a monocrystalline structure and a polycrystalline structure.

In an embodiment, the ternary material of monocrystalline structure has an average particle size of 1 µm-7 µm (e.g., 1 µm, 2 µm, 3 µm, 4 µm, 5 µm, 6 µm or 7 µm). By controlling the average particle size of ternary material of monocrystalline structure within the above range, the mechanical strength of the ternary material can be improved, while providing a larger specific surface area, thereby promoting faster diffusion of lithium ions and increasing the energy density of the lithium-ion battery.

In an embodiment, the ternary material of monocrystalline structure has an average particle size of 2 µm-5 µm.

In the invention, the average particle size can be determined by a method as described for testing Dv50, for example by using a laser particle size analyzer.

In an embodiment, the weight ratio of the ternary material of monocrystalline structure to the ternary material of polycrystalline structure is (1-20) : 1 (e.g., 1 : 1, 5 : 1, 10 : 1, 15 : 1 or 20 : 1). By controlling the weight ratio of the ternary material of monocrystalline structure to the ternary material of polycrystalline structure within the above range, the overall specific surface area of the ternary material is large, and the volume change of the ternary material of monocrystalline is small during cycling of the battery. When the proportion of the ternary material of monocrystalline structure in the ternary material is larger, the orderly deintercalation/intercalation of lithium ions under high-rate charging and discharging can be ensured, and the overall volume of the ternary material will not expand and contract rapidly, so that the aluminum foil is subjected to uniform stress in the battery, reducing the risk of aluminum foil breakage.

In an embodiment, the weight ratio of the ternary material of monocrystalline structure to the ternary material of polycrystalline structure is (2-10) : 1.

In an embodiment, the cell of the lithium-ion battery is of a wound structure, the positive electrode plate comprises a first positive electrode surface and a second positive electrode surface, the first positive electrode surface being located at one side of the positive electrode plate close to the center of the cell, and the second positive electrode surface being located at one side of the positive electrode plate facing away from the center of the cell, and the cell comprises a positive tab.

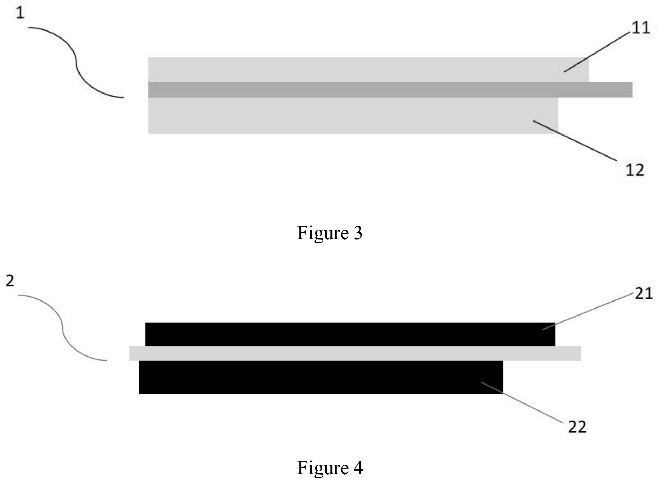

As shown in FIGs.1 and 3, the positive electrode plate 1 comprises a first positive electrode surface 11 and a second positive electrode surface 12, wherein the first positive electrode surface 11 is located at one side of the positive electrode plate close to the center of the cell, and the second positive electrode surface 12 is located at one side of the positive electrode plate facing away from the center of the cell.

Because the lithium-ion battery comprises the ternary material, its internal resistance is slightly higher. If a conventional tab structure is used (e.g., the tab is located at the beginning or end of the winding cell), the internal current density of the lithium-ion battery is high under high-rate discharging, which will further increase the internal resistance of the lithium-ion battery with ternary material. This causes the release of electric energy in the form of heat energy, resulting in more heat generated in the lithium-ion battery. In addition, the chemical reaction rate inside the lithium-ion battery will also increase, and the release of energy during the reaction process will also lead to generation of heat. Based on the special performance of the lithium-ion battery comprising ternary material, the tab in the disclosure is located in the intermediate position of the cell in the width direction. For example, a centrally located tab structure, that is, the positive tab 13 is located in the intermediate position of the first positive electrode surface in the length direction of the positive electrode plate. Such structure allows the current to be distributed more evenly on the tab of the lithium-ion battery, thereby improving the charging and discharging efficiency of the lithium-ion battery and reducing the uneven flow of current on the tab. It can also reduce the internal resistance of the lithium-ion battery, reduce local overheating, improve the heat dissipation performance of the lithium-ion battery, and enhance the overall performance and safety performance of the lithium-ion battery.

In the invention, the intermediate position refers to the position located between the N/3 fold and the 2*N/3 fold of the cell. For example, when a cell has 18 folds, the tab may be located between the 6th and 12th folds.

In an embodiment, a positive electrode coating located on the first positive electrode surface is a first positive electrode coating and a positive electrode coating located on the second positive electrode surface is a second positive electrode coating, the thickness of the second positive electrode coating > the thickness of the first positive electrode coating. When the positive tab 13 is located at the intermediate position of the first positive electrode surface in the length direction of the positive electrode plate, the current at the positive tab on the first positive electrode surface remains is at the peak for a long time, causing rapid release of lithium ions in the area near the positive tab, which easily leads to lithium plating. In order to improve the problem of lithium plating on the corresponding negative electrode in the area near the positive tab 13, a first positive electrode coating and a second positive electrode coating are respectively coated on the first positive electrode surface and the second positive electrode surface, and the thickness of the second positive electrode coating is greater than the thickness of the first positive electrode coating, so that the impedance of the interface between the electrolyte and the positive electrode can be reduced, the diffusion path of lithium ions can be increased, lithium ions can migrate to the negative electrode for alloying in an orderly manner, and the risk of lithium plating can be reduced. Because the thickness of the first positive electrode coating is small, the stress generated during charging and discharging is small, which can reduce the mechanical damage caused by the volume change of the ternary material and improve the durability of the electrode, thereby improving the charging and discharging performance of the lithium-ion battery and extending the life of the lithium-ion battery.

In an embodiment, the difference in thickness between the second positive electrode coating and the first positive electrode coating is 1 µm-20 µm (e.g., 1 µm, 3 µm, 5 µm, 8 µm, 10 µm, 13 µm, 15 µm, 18 µm or 20 µm). The design of different surfaces of the positive electrode allows the CB value of the lithium-ion battery within a suitable range, so that a certain concentration gradient can be formed during deintercalation/intercalation of lithium ions, and the lithium ions will diffuse to the negative electrode side under the influence of the concentration gradient and the electric field and then be intercalated into the negative electrode, thereby reducing the risk of lithium plating.

In an embodiment, the difference in thickness between the second positive electrode coating and the first positive electrode coating is 2 µm-15 µm.

In an embodiment, the first positive electrode coating has a thickness of 20 µm-150 µm (e.g., 20 µm, 30 µm, 40 µm, 50 µm, 60 µm, 70 µm, 80 µm, 90 µm, 100 µm, 110 µm, 120 µm, 130 µm, 140 µm or 150 µm).

In an embodiment, the second positive electrode coating has a thickness of 20 µm-150 µm (e.g., 20 µm, 30 µm, 40 µm, 50 µm, 60 µm, 70 µm, 80 µm, 90 µm, 100 µm, 110 µm, 120 µm, 130 µm, 140 µm or 150 µm).

In an embodiment, the difference in thickness between the second positive electrode coating and the first positive electrode coating is 1 µm-20 µm, the first positive electrode coating has a thickness of 20 µm-150 µm, and the second positive electrode coating has a thickness of 20 µm-150 µm.

In an embodiment, the difference in thickness between the second positive electrode coating and the first positive electrode coating is 2 µm-15 µm, the first positive electrode coating has a thickness of 20 µm-150 µm, and the second positive electrode coating has a thickness of 20 µm-150 µm.

In an embodiment, the ternary material comprises a first ternary material and a second ternary material.

In an embodiment, the first positive electrode coating comprises a first ternary material, a first positive electrode conductive agent, and a first positive electrode binder.

In an embodiment, the first positive electrode conductive agent includes at least one of conductive carbon black (Super P), acetylene black, Ketjen black, conductive graphite, conductive carbon fibers, carbon nanotubes and metal powder.

In an embodiment, the first positive electrode binder includes at least one of polyvinylidene fluoride (PVDF), sodium carboxymethyl cellulose, butadiene-styrene rubber, polytetrafluoroethylene and polyethylene oxide.

In an embodiment, the weight content of the first ternary material is 95%-98.5% (e.g., 95%, 96%, 97%, 98% or 98.5%), the weight content of the first positive electrode conductive agent is 0.5%-3% (e.g., 0.5%, 1%, 1.5%, 2%, 2.5% or 3%), and the weight content of the first positive electrode binder is 0.5%-3% (e.g., 0.5%, 1%, 1.5%, 2%, 2.5% or 3%), based on the total weight of the first positive electrode coating.

In an embodiment, the weight content of the first ternary material is 96%-98%, the weight content of the first positive electrode conductive agent is 0.7%-2%, and the weight content of the first positive electrode binder is 0.7%-2%, based on the total weight of the first positive electrode coating.

In an embodiment, the second positive electrode coating comprises a second ternary material, a second positive electrode conductive agent, and a second positive electrode binder.

In an embodiment, the second positive electrode conductive agent includes at least one of conductive carbon black (Super P), acetylene black, Ketjen black, conductive graphite, conductive carbon fibers, carbon nanotubes and metal powder.

In an embodiment, the second positive electrode binder includes at least one of polyvinylidene fluoride (PVDF), sodium carboxymethyl cellulose, butadiene-styrene rubber, polytetrafluoroethylene and polyethylene oxide.

In an embodiment, the weight content of the second ternary material is 95%-98.5% (e.g., 95%, 96%, 97%, 98% or 98.5%), the weight content of the second positive electrode conductive agent is 0.5%-3% (e.g., 0.5%, 1%, 1.5%, 2%, 2.5% or 3%), and the weight content of the second positive electrode binder is 0.5%-3% (e.g., 0.5%, 1%, 1.5%, 2%, 2.5% or 3%), based on the total weight of the second positive electrode coating.

In an embodiment, the weight content of the second ternary material is 96%-98%, the weight content of the second positive electrode conductive agent is 0.7%-1.5%, and the weight content of the second positive electrode binder is 0.7%-2%, based on the total weight of the second positive electrode coating.

In an embodiment, the negative electrode plate comprises a first negative electrode surface and a second negative electrode surface, the first negative electrode surface being located at one side of the negative electrode plate facing away from the center of the cell, and the second negative electrode surface being located at one side of the negative electrode plate close to the center of the cell, a negative electrode coating located on the first negative electrode surface is a first negative electrode coating and a negative electrode coating located on the second negative electrode surface is a second negative electrode coating, the thickness of the second negative electrode coating is greater than the thickness of the first negative electrode coating. In order to ensure a high degree of compatibility between the negative and positive electrode plates and thus avoid the problem of lithium plating, the relationship between the thickness of the first negative electrode coating and the thickness of the second negative electrode coating is controlled in the invention, so that the CB of the lithium-ion battery is more reasonable, thereby preventing overcharging (overcharging would cause greater volume expansion of the silicon carbon material), reducing the effect of the volume expansion of the silicon carbon material on the positive electrode current collector and avoiding positive electrode current collector breakage.

As shown in FIGs.1 and 4, the negative electrode plate 2 comprises a first negative electrode surface 21 and a second negative electrode surface 22, wherein the first negative electrode surface 21 is located at one side of the negative electrode plate close to the center of the cell, and the second negative electrode surface 22 is located at one side of the negative electrode plate facing away from the center of the cell.

In an embodiment, the difference in thickness between the second negative electrode coating and the first negative electrode coating is 1 µm-20 µm (e.g., 1 µm, 3 µm, 5 µm, 8 µm, 10 µm, 13 µm, 15 µm, 18 µm or 20 µm). The design of different surfaces of the negative electrode material (such as graphite or other alloys) can reduce the thickness of the positive and negative electrodes in the negative electrode single foil area (the single foil area is the area with the negative electrode active layer only on the surface of one side of the negative electrode current collector), increase the deintercalation/intercalation rate of lithium ion, reduce the accumulation of lithium ions during charging, and reduce the risk of lithium plating. Furthermore, reducing the thickness of the positive and negative electrodes reduces polarization during the charging and discharging process, improves the migration rate of lithium ions, reduces the expansion and contraction of materials (including silicon carbon material and graphite material) during the charging and discharging process, reduces the mechanical stress, and extends the cycle life.

In an embodiment, the difference in thickness between the second negative electrode coating and the first negative electrode coating is 3 µm-15 µm.

In an embodiment, the first negative electrode coating has a thickness of 30 µm-160 µm (e.g., 30 µm, 40 µm, 50 µm, 60 µm, 70 µm, 80 µm, 90 µm, 100 µm, 110 µm, 120 µm, 130 µm, 140 µm, 150 µm or 160 µm).

In an embodiment, the second negative electrode coating has a thickness of 30 µm-160 µm (e.g., 30 µm, 40 µm, 50 µm, 60 µm, 70 µm, 80 µm, 90 µm, 100 µm, 110 µm, 120 µm, 130 µm, 140 µm, 150 µm or 160 µm).

In an embodiment, the difference in thickness between the second negative electrode coating and the first negative electrode coating is 1 µm-20 µm, the first negative electrode coating has a thickness of 30 µm-160 µm, and the second negative electrode coating has a thickness of 30 µm-160 µm.

In an embodiment, the difference in thickness between the second negative electrode coating and the first negative electrode coating is 3 µm-15 µm, the first negative electrode coating has a thickness of 30 µm-160 µm, and the second negative electrode coating has a thickness of 30 µm-160 µm.

In an embodiment, the difference in thickness between the second positive electrode coating and the first positive electrode coating is 1 µm-20 µm, the first positive electrode coating has a thickness of 20 µm-150 µm, and the second positive electrode coating has a thickness of 20 µm-150 µm. The difference in thickness between the second negative electrode coating and the first negative electrode coating is 1 µm-20 µm, the first negative electrode coating has a thickness of 30 µm-160 µm, and the second negative electrode coating has a thickness of 30 µm-160 µm.

In an embodiment, the difference in thickness between the second positive electrode coating and the first positive electrode coating is 2 µm-15 µm, the first positive electrode coating has a thickness of 20 µm-150 µm, and the second positive electrode coating has a thickness of 20 µm-150 µm. The difference in thickness between the second negative electrode coating and the first negative electrode coating is 3 µm-15 µm, the first negative electrode coating has a thickness of 30 µm-160 µm, and the second negative electrode coating has a thickness of 30 µm-160 µm.

In an embodiment, the silicon carbon material comprises a first silicon carbon material and a second silicon carbon material.

In an embodiment, the first negative electrode coating comprises a first silicon carbon material, a first graphite material, a first negative electrode conductive agent, and a first negative electrode binder.

In an embodiment, the first graphite material includes artificial graphite and/or natural graphite.

In an embodiment, the first negative electrode conductive agent includes at least one of conductive carbon black, acetylene black, Ketjen black, conductive graphite, conductive carbon fibers, carbon nanotubes and metal powder.

In an embodiment, the first negative electrode binder includes at least one of styrene-butadiene rubber, sodium carboxymethyl cellulose, polyacrylic acid, polyvinyl alcohol and polyvinylidene fluoride.

In an embodiment, the weight content of the first silicon carbon material is 3%-40% (e.g., 3%, 5%, 8%, 10%, 13%, 15%, 18%, 20%, 30% or 40%), the weight content of the first graphite material is 59%-96% (e.g., 59%, 65%, 70%, 73%, 75%, 78%, 80%, 83%, 85%, 88%, 90%, 93% or 96%), the weight content of the first negative electrode conductive agent is 0.5%-2.5% (e.g., 0.5%, 1%, 1.5%, 2% or 2.5%), and the weight content of the first negative electrode binder is 0.5%-6% (e.g., 0.5%, 1%, 2%, 3%, 4%, 5% or 6%), based on the total weight of the first negative electrode coating.

In an embodiment, the weight content of the first silicon carbon material is 5%-25%, the weight content of the first graphite material is 72.8%-92.8%, the weight content of the first negative electrode conductive agent is 1%-2%, and the weight content of the first negative electrode binder is 1.2%-5%, based on the total weight of the first negative electrode coating.

In an embodiment, the second negative electrode coating comprises a second silicon carbon material, a second graphite material, a second negative electrode conductive agent, and a second negative electrode binder.

In an embodiment, the second graphite material includes artificial graphite and/or natural graphite.

In an embodiment, the second negative electrode conductive agent includes at least one of conductive carbon black, acetylene black, Ketjen black, conductive graphite, conductive carbon fibers, carbon nanotubes and metal powder.

In an embodiment, the second negative electrode binder includes at least one of styrene-butadiene rubber, sodium carboxymethyl cellulose, polyacrylic acid, polyvinyl alcohol and polyvinylidene fluoride.

In an embodiment, the weight content of the second silicon carbon material is 3%-40% (e.g., 3%, 5%, 8%, 10%, 13%, 15%, 18%, 20%, 30% or 40%), the weight content of the second graphite material is 59%-96% (e.g., 59%, 65%, 70%, 73%, 75%, 78%, 80%, 83%, 85%, 88%, 90%, 93% or 96%), the weight content of the second negative electrode conductive agent is 0.5%-2.5% (e.g., 0.5%, 1%, 1.5%, 2% or 2.5%), and the weight content of the second negative electrode binder is 0.5%-6% (e.g., 0.5%, 1%, 2%, 3%, 4%, 5% or 6%), based on the total weight of the second negative electrode coating.

In an embodiment, the weight content of the second silicon carbon material is 5%-25%, the weight content of the second graphite material is 72.8%-92.8%, the weight content of the second negative electrode conductive agent is 1%-2%, and the weight content of the second negative electrode binder is 1.2%-5%, based on the total weight of the second negative electrode coating.

In an embodiment, the cell comprises a negative tab 23 located at the intermediate position of the first negative electrode surface in the length direction of the negative electrode plate.

In an embodiment, the lithium-ion battery further comprises a separator and an electrolyte.

The electrolyte may be a conventional electrolyte in the art, for example, the electrolyte comprises a lithium salt, an organic solvent and an additive.

In an embodiment, the lithium salt includes one or more of lithium hexafluorophosphate (LiPF₆), lithium difluorophosphate (LiPO₂F₂), lithium difluoro(oxalato)borate (LiDFOB), lithium bis(fluorosulfonyl)imide (LiTFSI), lithium bis(trifluoromethanesulfonyl)imide, lithium bis(oxyalyl)difluorophosphate, lithium tetrafluoroborate, lithium bis(oxalato)borate, lithium hexafluoroantimonate, lithium hexafluoroarsenate, lithium bis(trifluoromethanesulfonyl)imide, lithium bis(pentafluoroethanesulfonyl)imide, lithium tris(trifluoromethanesulfonyl)methide, and lithium bis(trifluoromethanesulfonyl)imide.

In an embodiment, the organic solvent comprises cyclic carbonate and linear carbonate.

In an embodiment, the cyclic carbonate includes ethylene carbonate (EC) and/or propylene carbonate (PC).

In an embodiment, the linear carbonate includes diethyl carbonate (DEC) and/or ethyl methyl carbonate (EMC).

In an embodiment, the organic solvent further includes one or more of propyl propionate (PP), ethyl propionate (EP), ethyl butyrate (EB), and ethyl acetate (EA).

In an embodiment, the additive includes one or more of fluoroethylene carbonate (FEC), 1,3-propane sultone (PS), 1,3-propenesltone (PST), vinylene carbonate (VC), vinylethylene carbonate (VEC), succinonitrile (SN), ethylene sulfate, and 1,3,6-hexanetricarbonitrile (HTCN).

In an embodiment, the weight content of the lithium salt is 12%-21% (e.g., 12%, 13%, 14%, 15%, 16%, 17%, 18%, 19%, 20% or 21%), the weight content of the organic solvent is 54%-70% (e.g., 54%, 56%, 58%, 60%, 64%, 66%, 68% or 70%), and the weight content of the additive is 15%-25% (e.g., 15%, 18%, 20%, 23% or 25%), based on the total weight of the electrolyte.

The separator may be a conventional separator in the art. For example, the separator comprises a substrate, a ceramic layer located on the surface of one or both sides of the substrate, and an adhesive layer located on the surface of the substrate and/or the surface of the ceramic layer.

In an embodiment, the substrate includes one or more of PP and PE.

In an embodiment, the ceramic layer includes inorganic particles and a separator binder.

In an embodiment, the inorganic particles include aluminum oxide.

In an embodiment, the separator adhesive includes PVDF and PMMA.

In an embodiment, the weight content of the inorganic particles is 90%-99% (e.g., 90%, 91%, 92%, 93%, 94%, 95%, 96%, 97%, 98% or 99%), and the weight content of the separator binder is 1 %-10% (e.g., 1%, 2%, 3%, 4%, 5%, 6%, 7%, 8%, 9% or 10%), based on the total weight of the ceramic layer.

In an embodiment, the adhesive layer includes one or more of polyvinylidene fluoride (PVDF) and polymethyl methacrylate (PMMA).

In an embodiment, the lithium-ion battery is a lithium-ion secondary battery.

The invention will be described in detail below by means of examples. The examples described in the invention are only some, rather than all, of the examples of the invention. Based on the examples in the invention, all other examples obtained by those of ordinary skill in the art without involving creative effort belong to the scope of protection of the invention.

The following examples are intended to illustrate the lithium-ion battery of the invention.

### Example 1

### (1) Negative electrode plate

The first silicon carbon material (having a median particle size Dv50 of 10 µm), the first graphite material (including artificial graphite), the first negative electrode conductive agent Super P, and the first negative electrode binder (styrene-butadiene rubber (SBR) and sodium carboxymethyl cellulose (CMC) in a weight ratio of 1 : 1) were dispersed in an appropriate amount of deionized water in a weight ratio of 5 : 92 : 1 : 2 and stirred thoroughly to form a uniform first negative electrode slurry. The first negative electrode slurry was then coated on the surface of one side of the negative electrode current collector copper foil to form a first negative electrode coating.

The second silicon carbon material (having a median particle size Dv50 of 10 µm), the second graphite material (including artificial graphite), the second negative electrode conductive agent Super P, and the second negative electrode binder (styrene-butadiene rubber (SBR) and sodium carboxymethyl cellulose (CMC) in a weight ratio of 1 : 1) were dispersed in an appropriate amount of deionized water in a weight ratio of 5 : 92 : 1 : 2 and stirred thoroughly to form a uniform second negative electrode slurry. The second negative electrode slurry was then coated on the surface of the other side of the negative electrode current collector copper foil to form a second negative electrode coating. Then, after drying, rolling, cutting, cleaning, and attaching tab adhesive, the negative electrode plate was obtained.

The carbonization temperature of the carbon matrix of the silicon carbon material was 950°C and the deposition temperature of the silicon material was 500°C. In the Raman spectrum, I₁ was 1000, I₂ was 500, I₃ was 3000, I₄ was 3000, satisfying I₃ > Max[I₁, I₂] and I₄ > Max[I₁, I₂], ρ=(I₁+I₃)/(I₂+I₄)=1.14.

### (2) Positive electrode plate

The first ternary material (a ternary lithium material, doping element M being Al, the weight content of the doping element in the ternary material being 0.5%, the molar percentage of the manganese element in the ternary material being 5%, the ternary material having a monocrystalline structure and a polycrystalline structure, and the weight ratio of the ternary material of monocrystalline structure to the ternary material of polycrystalline structure being 7 : 1), the first positive electrode conductive agent (Super P), and the first positive electrode binder (polyvinylidene fluoride (PVDF)) were dispersed in an appropriate amount of N-methylpyrrolidone (NMP) in a weight ratio of 98 : 1.2 : 0.8 and stirred thoroughly to form a uniform first positive electrode slurry. The first positive electrode slurry was then coated on the surface of one side of the positive electrode current collector aluminum foil to form a first positive electrode coating.

The second ternary material (a ternary lithium material, doping element M being Al, the weight content of the doping element in the ternary material being 0.5%, the molar percentage of the manganese element in the ternary material being 5%, the ternary material having a monocrystalline structure and a polycrystalline structure, and the weight ratio of the ternary material of monocrystalline structure to the ternary material of polycrystalline structure being 7 : 1), the second positive electrode conductive agent (Super P), and the second positive electrode binder (polyvinylidene fluoride (PVDF)) were dispersed in an appropriate amount of N-methylpyrrolidone (NMP) in a weight ratio of 98 : 1.2 : 0.8 and stirred thoroughly to form a uniform second positive electrode slurry. The second positive electrode slurry was then coated on the surface of the other side of the positive electrode current collector aluminum foil to form a second positive electrode coating. Then, after drying, rolling, cutting, cleaning, and attaching tab adhesive, the positive electrode plate was obtained.

### (3) Electrolyte

In a glove box filled with argon gas (H₂O < 0.1 ppm, O₂ < 0.1 ppm), the linear carbonate, the cyclic carbonate and the organic solvent were uniformly mixed, and then a thoroughly dried lithium salt was added thereto rapidly, then an additive was added, and the mixture was stirred for 10 h to be fully dissolved, so as to obtain the desired electrolyte. The lithium salt was 15 parts by weight of lithium hexafluorophosphate. The organic solvents was 75 parts by weight, of which the linear carbonates was 55 parts by weight (of which the weight ratio of DEC to EMC was 5 : 1); and the cyclic carbonates was 20 parts by weight (of which the weight ratio of EC to PC was 1 : 1). The additive consisted of 3 parts by weight of 1,3-propane sultone, 1 part by weight of ethylene sulfate, and 6 parts by weight of fluoroethylene carbonate, totaling 10 parts by weight.

### (4) Lithium-ion battery

The positive electrode plate obtained in step (2), the negative electrode plate obtained in step (1), and the separator were stacked in the order of the positive electrode plate, the separator, and the negative electrode plate, and the stack was then wound to obtain a cell. The cell was placed into an aluminum foil packaging, and the electrolyte obtained in step (3) was injected into the packaging, followed by processes including vacuum sealing, leaving to stand, formation, shaping, sorting, etc., to obtain a lithium-ion battery.

The initial charging and discharging efficiency was 95%, and the high-temperature cycling thickness expansion rate was 12.2%.

### Example 2

(1) Negative electrode plate The procedure was carried out with reference to Example 1.
(2) Positive electrode plate The procedure was carried out with reference to Example 1, except that the doping element M in the ternary material was Ti, the weight content of the doping element in the ternary material was 4.3%, the molar percentage of the manganese element in the ternary material was 20%, the ternary material had a monocrystalline structure and a polycrystalline structure, and the weight ratio of the ternary material of monocrystalline structure to the ternary material of polycrystalline structure was 7 : 1. Both the first ternary material and second ternary material were the aforementioned ternary materials.
(3) Electrolyte The procedure was carried out with reference to Example 1, except that the lithium salt was 15 parts by weight of lithium hexafluorophosphate; the organic solvents was 75 parts by weight, of which the linear carbonates was 65 parts by weight (of which the weight ratio of DEC to EMC was 5 : 1); and the cyclic carbonates was 10 parts by weight (of which the weight ratio of EC to PC was 1 : 1), the additive was consisting of 3 parts by weight of 1,3-propane sultone, 1 part by weight of ethylene sulfate, and 6 parts by weight of fluoroethylene carbonate, totaling 10 parts by weight.
(4) The procedure of lithium-ion battery was the same as in Example 1.

### Example 3 Group

This group of examples was used to illustrate the effect when the weight ratio of the linear carbonate to the cyclic carbonate was changed.

### Example 3a

The procedure was carried out with reference to Example 1, except that in the electrolyte, the weight content of the linear carbonate was 50%, the weight content of the cyclic carbonate was 25%, and the weight ratio of the linear carbonate to the cyclic carbonate was 2.

### Example 3b

The procedure was carried out with reference to Example 1, except that in the electrolyte, the weight content of the linear carbonate was 62.5%, the weight content of the cyclic carbonate was 12.5%, and the weight ratio of the linear carbonate to the cyclic carbonate was 5.

### Example 3c

The procedure was carried out with reference to Example 1, except that in the electrolyte, the weight content of the linear carbonate was 37.5%, the weight content of the cyclic carbonate was 37.5%, and the weight ratio of the linear carbonate to the cyclic carbonate was 1.

### Example 3d

The procedure was carried out with reference to Example 1, except that in the electrolyte, the weight content of the linear carbonate was 66.6%, the weight content of the cyclic carbonate was 8.4%, and the weight ratio of the linear carbonate to the cyclic carbonate was 7.9.

### Example 4 group

This group of examples was used to illustrate the effect when the Raman spectrum of the silicon carbon material was changed by changing the carbonization temperature of the carbon matrix and the deposition temperature of the silicon material in the silicon-carbon material.

### Example 4a

This group of examples was carried out with reference to Example 1, except that the Raman spectrum of the silicon carbon material was adjusted by changing the carbonization temperature of the carbon matrix to 800°C and the deposition temperature of the silicon material to 400°C, as detailed in Table 1-1. The initial charging and discharging efficiency of Example 4a was 95%.

### Example 4b

This group of examples was carried out with reference to Example 1, except that the Raman spectrum of the silicon carbon material was adjusted by changing the carbonization temperature of the carbon matrix to 900°C and the deposition temperature of the silicon material to 420°C, as detailed in Table 1-1.

### Example 4c

This group of examples was carried out with reference to Example 1, except that the Raman spectrum of the silicon carbon material was adjusted by changing the carbonization temperature of the carbon matrix to 1000°C and the deposition temperature of the silicon material to 450°C, as detailed in Table 1-1.

### Example 4d

This group of examples was carried out with reference to Example 1, except that the Raman spectrum of the silicon carbon material was adjusted by changing the carbonization temperature of the carbon matrix and the deposition temperature of the silicon material, as detailed in Table 1-1.

### Example 4e

This group of examples was carried out with reference to Example 1, except that the Raman spectrum of the silicon carbon material was adjusted by changing the carbonization temperature of the carbon matrix to 1100°C and the deposition temperature of the silicon material to 550°C, as detailed in Table 1-1.

**Table 1-1**

| | Median particle size Dv50 of silicon carbon material / µm | Does it satisfy the condition I₃ > Max[I₁, I₂]? | Does it satisfy the condition I₄ > Max[I₁, I₂]? | (I₁+I₃)/(I₂+I₄) |
|---|---|---|---|---|
| Example 1 | 10 | Yes | Yes | 1.14 |
| Example 4a | * | Yes | No | 1.93 |
| Example 4b | * | Yes | Yes | 1.37 |
| Example 4c | * | Yes | Yes | 0.91 |
| Example 4d | * | Yes | Yes | 2.4 |
| Example 4e | * | Yes | Yes | 0.66 |

| | | | | |
|---|---|---|---|---|
| * indicates the same as in Example 1. | | | | |

### Example 5 group

This group of examples was used to illustrate the effect when the doping element M in the ternary material was changed.

### Example 5a

The procedure was carried out with reference to Example 1, except that the doping element M in the ternary material was Mg.

### Example 5b

The procedure was carried out with reference to Example 1, except that the doping element M in the ternary material was Fe.

### Example 5c

The procedure was carried out with reference to Example 1, except that the doping element M in the ternary material was W.

### Example 6 group

This group of examples was used to illustrate the effect when the weight content P of the doping element M in the ternary material was changed.

### Example 6a

The procedure was carried out with reference to Example 1, except that the weight content of the doping element M in the ternary material was 0.01%.

### Example 6b

The procedure was carried out with reference to Example 1, except that the weight content of the doping element M in the ternary material was 0.1%.

### Example 6c

The procedure was carried out with reference to Example 1, except that the weight content of the doping element M in the ternary material was 3%.

### Example 6d

The procedure was carried out with reference to Example 1, except that the weight content of the doping element M in the ternary material was 5%.

### Example 7 group

This group of examples was used to illustrate the effect when the weight ratio of the ternary material of monocrystalline structure to the ternary material of polycrystalline structure was changed.

### Example 7a

The procedure was carried out with reference to Example 1, except that the weight ratio of the ternary material of monocrystalline structure to the ternary material of polycrystalline structure was 1 : 1. The high-temperature cycling thickness expansion rate was 13.6%.

### Example 7b

The procedure was carried out with reference to Example 1, except that the weight ratio of the ternary material of monocrystalline structure to the ternary material of polycrystalline structure was 2 : 1. The high-temperature cycling thickness expansion rate was 14.1%.

### Example 7c

The procedure was carried out with reference to Example 1, except that the weight ratio of the ternary material of monocrystalline structure to the ternary material of polycrystalline structure was 10 : 1. The high-temperature cycling thickness expansion rate was 16.5%.

### Example 7d

The procedure was carried out with reference to Example 1, except that all ternary materials were of monocrystalline structure. The high-temperature cycling thickness expansion rate was 20.3%.

### Example 7e

The procedure was carried out with reference to Example 1, except that all ternary materials were of polycrystalline structure. The high-temperature cycling thickness expansion rate was 12.6%.

### Example 8 group

This group of examples was used to illustrate the effect when the thickness of the first positive electrode coating and the thickness of the second positive electrode coating were changed.

This group of examples was carried out with reference to Example 1, except that the thickness of the first positive electrode coating and the thickness of the second positive electrode coating were changed, as detailed in Table 1-2.

### Example 9 group

This group of examples was used to illustrate the effect when the thickness of the first negative electrode coating and the thickness of the second negative electrode coating were changed.

This group of examples was carried out with reference to Example 1, except that the thickness of the first negative electrode coating and the thickness of the second negative electrode coating were changed, as detailed in Table 1-2.

**Table 1-2**

| | Thickness of first positive electrode coating / µm | Thickness of second positive electrode coating / µm | Difference in thickness between second positive electrode coating and first positive electrode coating / µm | Thickness of first negative electrode coating / µm | Thickness of second negative electrode coating / µm | Difference in thickness between second negative electrode coating and first negative electrode coating / µm |
|---|---|---|---|---|---|---|
| Example 1 | 89 | 91 | 2 | 55 | 57 | 2 |
| Example 8a | 20 | 35 | 15 | 55 | 57 | 2 |
| Example 8b | 130 | 150 | 20 | 55 | 57 | 2 |
| Example 8c | 150 | 152 | 2 | 55 | 57 | 2 |
| Example 8d | 18 | 20 | 2 | 55 | 57 | 2 |
| Example 8e | 89 | 89 | 0 | 55 | 55 | 0 |
| Example 9a | 89 | 91 | 2 | 140 | 160 | 20 |
| Example 9b | 89 | 91 | 2 | 30 | 45 | 15 |
| Example 9c | 89 | 91 | 2 | 160 | 162 | 2 |
| Example 9d | 89 | 91 | 2 | 28 | 30 | 2 |

### Comparative example 1

The procedure was carried out with reference to Example 1, except that in the electrolyte, the weight content of the linear carbonate was 35%, the weight content of the cyclic carbonate was 40%, and the weight ratio of the linear carbonate to the cyclic carbonate was 0.88.

### Comparative example 2

The procedure was carried out with reference to Example 1, except that in the electrolyte, the weight content of the linear carbonate was 68%, the weight content of the cyclic carbonate was 7%, and the weight ratio of the linear carbonate to the cyclic carbonate was 9.71.

### Comparative example 3

The procedure was carried out with reference to Example 1, except that the Raman spectrum of the silicon carbon material was adjusted by changing the carbonization temperature of the carbon matrix and the deposition temperature of the silicon material. The carbonization temperature was 1300°C and the deposition temperature was 600°C, as detailed in Table 1-3.

### Comparative example 4

The procedure was carried out with reference to Example 1, except that there was no doping element in the ternary material.

**Table 1-3**

| | Median particle size Dv50 of silicon carbon material / µm | Does it satisfy the condition I₃ > Max[I₁, I₂]? | Does it satisfy the condition I₄ > Max[I₁, I₂]? | (I₁+I₃)/(I₂+I₄) |
|---|---|---|---|---|
| Example 1 | 10 | Yes | Yes | 0.86 |
| Comparative example 3 | * | No | Yes | 0.57 |

| | | | | |
|---|---|---|---|---|
| * indicates the same as in Example 1. | | | | |

### Test examples

### 1.High-temperature cycling performance and breakage test

(1) At 45°C, the lithium-ion battery was charged to 4.42 V at a constant current of 1 C, then charged to an upper limit voltage (4.45 V) at 0.7 C and charged to 0.05 C at a constant voltage of 4.45 V. The battery was let to stand for 5 minutes and the thickness of the battery at this time was measured and recorded as the initial thickness H0. Next, the battery was discharged to 3 V at a constant current of 0.7 C. The discharge capacity at this time was recorded as the initial discharge capacity C0. The battery was let to stand for 5 minutes.
(2) The procedure of step (1) was cycled for 700T, and the discharge capacity at the 700T cycle was recorded as C1 and the thickness was recorded as H1.
$Capacity retention rate : C = \left(C1/C0\right) \times 100 % , thickness expansion rate = \left[\left(H1-H0\right)/H0\right] \times 100 % .$

The battery was disassembled after 700T cycles to observe the aluminum foil breakage. If the positive electrode plate is intact without cracks, the result is indicated as no breakage; if there is a slight crack in the outermost first fold of the wound cell and there is no crack in the inner positive electrode plate, the result is indicated as slight breakage; if there are cracked positive electrode plates in both the outermost and inner layers of the wound cell, the result is indicated as breakage.

### 2.Oven test

After charging and discharging, the fully charged cell (100% SOC) was placed in an oven, which was heated at a rate of 5°C/min to 140°C and held for 1 hour. If there was fire or explosion, the test was considered a failure; if there was no fire or explosion, the test was considered a pass. 10 cells in total were tested, and the result was expressed as the oven pass rate. Oven pass rate = (numbers of passing the oven test / 10) × 100%.

The results are recorded in Table 2.

| | Aluminum foil breakage | High-temperature cycling capacity retention rate / % | Oven pass rate / % |
|---|---|---|---|
| Example 1 | No breakage | 83.4 | 100 |
| Example 2 | No breakage | 81.9 | 100 |
| Example 3a | No breakage | 82.7 | 100 |
| Example 3b | No breakage | 82 | 100 |
| Example 3c | No breakage | 80.4 | 100 |
| Example 3d | No breakage | 79.3 | 100 |
| Example 4a | Slight breakage | 77.5 | 80 |
| Example 4b | No breakage | 81.4 | 100 |
| Example 4c | No breakage | 82.2 | 100 |
| Example 4d | No breakage | 78.1 | 100 |
| Example 4e | No breakage | 79.4 | 100 |
| Example 5a | No breakage | 83.3 | 100 |
| Example 5b | No breakage | 83.5 | 100 |
| Example 5c | No breakage | 82.9 | 100 |
| Example 6a | No breakage | 80.4 | 100 |
| Example 6b | No breakage | 82.6 | 100 |
| Example 6c | No breakage | 81.5 | 100 |
| Example 6d | No breakage | 78.4 | 100 |
| Example 7a | No breakage | 78.5 | 100 |
| Example 7b | No breakage | 80.7 | 100 |
| Example 7c | No breakage | 82.2 | 100 |
| Example 7d | No breakage | 83.4 | 100 |
| Example 7e | No breakage | 77.3 | 100 |
| Example 8a | No breakage | 84.2 | 100 |
| Example 8b | No breakage | 80.44 | 100 |
| Example 8c | No breakage | 83 | 100 |
| Example 8d | No breakage | 81.2 | 100 |
| Example 8e | Slight breakage | 78 | 70 |
| Example 9a | No breakage | 75.9 | 100 |
| Example 9b | No breakage | 82.7 | 100 |
| Example 9c | No breakage | 79.2 | 100 |
| Example 9d | No breakage | 83.4 | 100 |
| Comparative example 1 | Breakage | 74.2 | 30 |
| Comparative example 2 | Breakage | 69.3 | 20 |
| Comparative example 3 | Breakage | 70.8 | 40 |
| Comparative example 4 | Breakage | 72.4 | 40 |

As can be seen from Table 2, by comparing the comparative examples and the examples, it can be seen that the lithium-ion battery of the examples has significantly reduced breakage, significantly improved high-temperature cycling capacity retention rate, and significantly improved oven performance. This indicates that by combining the silicon carbon material, the electrolyte, and the ternary material, the problem of positive electrode current collector breakage has been improved, and the cycling performance and safety performance of the battery have been improved.

The preferred embodiments of the invention have been described in detail above; however, the invention is not limited thereto. Within the technical concept of the invention, various simple modifications can be made to the technical solution of the invention, including the combination of various technical features in any other suitable way. These simple modifications and combinations should also be regarded as the content disclosed by the invention and all fall within the scope of protection of the invention.

## Claims

1. A lithium-ion battery, **characterized in that** comprising a positive electrode plate, a negative electrode plate and an electrolyte, wherein the positive electrode plate comprises a ternary material, and the ternary material comprises a doping element M, wherein M comprises one or more of Al, Mg, Ti, Fe, W, V and Mo;
the negative electrode plate comprises a silicon carbon material having a median particle size Dv50 of 5 µm-30 µm, in a Raman spectrum of the silicon carbon material, a first characteristic peak located at 470 cm⁻¹-480 cm⁻¹ has an intensity of I₁, a second characteristic peak located at 507 cm⁻¹-517 cm⁻¹ has an intensity of I₂, a third characteristic peak located at 1330 cm⁻¹-1350 cm⁻¹ has an intensity of I₃, and I₃ > Max[I₁, I₂];
the electrolyte comprises a linear carbonate and a cyclic carbonate, the weight ratio of the linear carbonate to the cyclic carbonate is 1-8, and the sum of the percentages of the linear carbonate and the cyclic carbonate to the total mass of the electrolyte is 20%-75%.

2. The lithium-ion battery according to claim 1, **characterized in that** the weight content p% of the doping element M is 0.01%-5%, preferably 0.1%-3%, based on the total weight of the ternary material; and/or,
the silicon carbon material has a median particle size Dv50 of 6 µm-12 µm; and/or,
the weight ratio of the linear carbonate to the cyclic carbonate is 2-5.

3. The lithium-ion battery according to claim 1 or 2, **characterized in that** in a Raman spectrum of the silicon carbon material, a fourth characteristic peak located at 1590 cm⁻¹-1610 cm⁻¹ has an intensity of I₄, and I₄ > Max[I₁, I₂].

4. The lithium-ion battery according to claim 3, **characterized in that** the silicon carbon material further satisfies the following relation: ρ = (I₁+I₃)/(I₂+I₄), where 0.65 ≤ ρ ≤ 2.4.

5. The lithium-ion battery according to any one of claims 1 to 4, **characterized in that** the ternary material comprises nickel element, cobalt element and manganese element, the molar percentage N of the manganese element in the ternary material being 2% ≤ N ≤ 30%, preferably 5% ≤ N ≤ 20%; and/or,
the ternary material comprises a ternary material of a monocrystalline structure having an average particle size of 1 µm-7 µm, preferably 2 µm-5 µm; and/or,
the ternary material includes a ternary material of monocrystalline structure and a ternary material of polycrystalline structure, and the weight ratio of the two being (1-20) : 1, preferably (2-10) : 1.

6. The lithium-ion battery according to any one of claims 1 to 5, **characterized in that** the cell of the lithium-ion battery is of a wound structure, the positive electrode plate (1) comprises a first positive electrode surface (11) and a second positive electrode surface (12), the first positive electrode surface (11) being located at one side of the positive electrode plate close to the center of the cell, and the second positive electrode surface (12) being located at one side of the positive electrode plate facing away from the center of the cell, and the cell comprises a positive tab (13).

7. The lithium-ion battery according to claim 6, **characterized in that** a positive electrode coating located on the first positive electrode surface is a first positive electrode coating and a positive electrode coating located on the second positive electrode surface is a second positive electrode coating, the thickness of the second positive electrode coating is greater than the thickness of the first positive electrode coating; and/or,
the positive tab is located in the intermediate position of the first positive electrode surface in the length direction of the positive electrode plate.

8. The lithium-ion battery according to claim 7, **characterized in that** the difference in thickness between the second positive electrode coating and the first positive electrode coating is 1 µm-20 µm, preferably 2 µm-15 µm; and/or,
the first positive electrode coating has a thickness of 20 µm-150 µm; and/or,
the second positive electrode coating has a thickness of 20 µm-150 µm.

9. The lithium-ion battery according to any one of claims 1 to 8, **characterized in that** the negative electrode plate (2) comprises a first negative electrode surface (21) and a second negative electrode surface (22), the first negative electrode surface (21) being located at one side of the negative electrode plate facing away from the center of the cell, and the second negative electrode surface (22) being located at one side of the negative electrode plate close to the center of the cell, a negative electrode coating located on the first negative electrode surface is a first negative electrode coating and a negative electrode coating located on the second negative electrode surface is a second negative electrode coating, the thickness of the second negative electrode coating is greater than the thickness of the first negative electrode coating.

10. The lithium-ion battery according to claim 9, **characterized in that** the difference in thickness between the second negative electrode coating and the first negative electrode coating is 1 µm-20 µm, preferably 3 µm-15 µm;
and/or, the first negative electrode coating has a thickness of 30 µm-160 µm;
and/or, the second negative electrode coating has a thickness of 30 µm-160 µm.

11. The lithium-ion battery according to claim 9 or 10, **characterized in that** the silicon carbon material comprises a first silicon carbon material and a second silicon carbon material; and/or,
the first negative electrode coating comprises a first silicon carbon material, a first graphite material, a first negative electrode conductive agent, and a first negative electrode binder, wherein a weight content of the first silicon carbon material is 3%-40%; and/or,
the second negative electrode coating comprises a second silicon carbon material, a second graphite material, a second negative electrode conductive agent, and a second negative electrode binder, wherein a weight content of the second silicon carbon material is 3%-40%.

12. The lithium-ion battery according to any one of claims 1 to 11, **characterized in that** the cyclic carbonate includes ethylene carbonate and/or propylene carbonate; and/or,
the linear carbonate includes diethyl carbonate and/or ethyl methyl carbonate.

13. The lithium-ion battery according to any one of claims 1 to 12, **characterized in that** the electrolyte comprises an additive, and the additive includes one or more of fluoroethylene carbonate, 1,3-propane sultone, 1,3-propenesltone, vinylene carbonate, vinylethylene carbonate, succinonitrile, ethylene sulfate, and 1,3,6-hexanetricarbonitrile.

14. The lithium-ion battery according to any one of claims 1 to 13, **characterized in that** the lithium-ion battery is a lithium-ion secondary battery.
